# EUROPEAN PATENT APPLICATION

(11) **EP 1 900 760 A1**
(43) Date of publication of application: **19.03.2008**
(21) Application number: 06019211.9
(22) Date of filing: 14.09.2006
(51) Int. Cl.: C08F 220/22

(54) **Photo-curable acrylate and vinyl resin mixtures having very high refractive indices and low melting points**

(71) Applicant: SeeReal Technologies S.A., 1528 Luxembourg (LU)
(72) Inventor: Peng, Bin, 73430 Aalen (DE); Sahm, Hagen, 01307 Dresden (DE)

(57) **Abstract**

Acrylate and vinyl resin mixtures with the properties of photo-curability, very high refractive indices, and low melting points are comprised of
(a) one or several multi-halogenated aromatic acrylates or multi-halogenated aromatic methacrylates, typically 2,3,4,5,6-pentabromophenyl acrylate, 2,3,4,5,6-pentabromobenzyl acrylate, 2,3,4,5,6-pentabromophenyl methacrylate, 2,3,4,5,6-pentabromobenzyl methacrylate, 2,4,6-tribromophenyl acrylate, or 2,4,6-tribromophenyl methacrylate, 2,4,6-triiodophenyl acrylate, or 2,4,6-triiodophenyl methacrylate, with a weight percent of 30 to 70 % for each acrylate or methacrylate, preferably 40 to 60 % in the formulation.
(b) one or several compounds of condensed aromatics, typically 9-anthracylmethacrylate, with a weight percent of 30 to 70% for each, preferably 40 to 60 % in the formulation.
(c) one or several aromatic vinyl compounds, typically 1- or 2-vinyl naphthalene, or N-vinyl carbazole, with a weight percent of 30 to 70 % for each, preferably 40 to 60% in the formulation.
(d) and a photo-initiator, e.g. Lucirin TPO-L or lrgacurl84, with a weight percent of 0.1 to 5 %, preferably 0.5 to 1.5 % in the formulation.

## Description

### 1. Background

The present invention relates to acrylate and vinyl resin mixtures with very high refractive indices and low melting points. Such resin mixtures find applications in various optical fields where very high refractive indices of plastic optical elements are required. One example of such fields is lenticulars or optical components in general.

Due to lower costs, lightweight and the fact that aspherical parts can be manufactured as conveniently as spherical parts, optical plastic is drawing more and more interests in the field of optical materials, where silicate glasses dominate. Techniques to manufacture optical plastics include photo-curing, injection moulding, compression moulding, or casting, to name just a few. The photo-curing technique, like WO 2006 / 027217 or PCT/EP 2005/012244 is among them of special interest due to absence of solvent, low demand on equipment, low consume of energy and low burden on environments. One of the material preconditions for photo-curing is that the resins must be at a liquid state at processing temperatures which are usually at room temperatures or slightly higher. This enables to high accuracy in the replications step and reduced effort for the moulding.
A class of appropriate curable resins with high refractive index is specified in EP 06006290 "Photo-curable resins and resin compositions with very high refractive indices for application in plastic optics".

With regard to an application as optical parts the refractive index of the chosen resins and plastics is one of the most important material properties. Further objects like scratch resistance, chemical properties, thermal stability, no ageing tendency, being free from odour and the like can be optimized within the basic scope of this invention.

Refractive index of optical plastics which are industrially available ranges from 1.45 to about 1.61. Optical materials with high refractive index (>1.6) are of special interest. From a chemical point of view, molecules with one or more atoms or groups like bromine, iodine, sulphur, and aromatic ring show normally high refractive indices.
Such compounds, however, generally have high melting points (often above 100°C) because of the (multiple-) presence of the large atoms and aromatic rings in the molecules.

As mentioned above, the material must be in a liquid state, in order that it can be processed with the photo-curing technique. One idea to liquefy the above mentioned high index solid compounds, is to dissolve them in suitable liquid media. Further studies and experiments show, however, that this is challenging.

First, the liquid media must themselves also have very high refractive indices so that the final mixture results in a system which shows high refractive index as presupposed. To find and to realize such liquids is itself a challenging task.

Secondly, suppose that such liquids were available, the next question will be solubility of the solid compounds in these liquids. Because of the ample variety of these solid compounds, an answer to the solubility question is likely to be more discouraging than encouraging. Summarizing, it can be concluded that dissolving the compounds can be defined as very difficult.
It is the main goal of this invention to overcome those drawbacks.

### 2. Description of the invention

As a basic principle of the current invention obtaining liquefied resins bases on the eutectic principle. Eutectic, according to "Encyclopædia Britannica", is one mixture of a set of substances able to dissolve in one another as liquids that, of all such mixtures, liquefies at the lowest temperature. This eutectic principle and basic inventive approach is applied, in which two or more components with high melting points are mixed together, so that at certain compositions, the mixtures show melting points which are lower than those of all the pure components. There are eutectic examples, e.g., in metallurgy, in which, compared to the components, very low melting points can be obtained.
A eutectic can generally be a mixture of two or more components. The present invention focuses mainly on binary systems where only two components are involved. Ternary or even higher systems are included within the scope of this invention. Systems with three and more components provide generally more possibilities to adjust (usually to lower) the melting points. The number of samples, however, increases exponentially with the number of components, if complete studies of all possibilities are to be carried out.
In a first approach the focus of this invention is therefore put on the binary systems and the results will be exploited to systems of higher degrees.

In the present invention there are two classes of components for the eutectic: acrylate and vinyl monomers. The choice on the monomer classes is set by the fact that the mixtures are to be processed with the photo-curing techniques. Acrylates form one of the main classes of photo-curable materials. Vinyl compounds have generally much less photo-curability than the acrylate counterparts. The photo-curability of the vinyl compounds can be greatly increased by mixing with acrylates because that copolymerization takes place in such systems. For the reason that at least one acrylate monomer has to be present in a eutectic system, eutectic mixtures in the present invention comprised, therefore, acrylate-acrylate or acrylate-vinyl, but not vinyl-vinyl.

One important criterion to design molecules for the eutectic is that the refractive index of the resulting molecules should be as high as possible. In order to raise refractive index, atoms and groups with potential high refractive index are to be attached to the polymerizable groups, i.e. acrylate and vinyl. As discussed before, like bromine, iodine, sulphur, and aromatic ring are examples of such atoms and groups. As shown in Table 1 eight components are designed based on these principles.

**Table 1 List of eutectic components**

| **No.** | **Component name** | **Code** |
|---|---|---|
| 1 | 2,3,4,5,6-Pentabromophenyl acrylate | PBPA |
| 2 | 2,3,4,5,6-Pentabromophenyl methacrylate | PBPM |
| 3 | 2,3,4,5,6-Pentabromobenzyl acrylate | PBBA |
| 4 | 2,4,6-Triiodophenyl acrylate | TIA |
| 5 | 2,4,6-Tribromophenyl acrylate | TBA |
| 6 | 9-Anthracylmethyl acrylate | AMA |
| 7 | 1-Vinyl naphthalene | VN |
| 8 | N-Vinyl carbazole | VK |

In the first three components, i.e. PBPA, PMPM, and PBBA, all the five hydrogen atoms on the benzene ring are substituted by bromines. The benzene ring is explicitly "saturated" with bromines, which would result in a maximum of increase in refractive index for this type of compounds.

For TIA and TBA, there are, instead of five, only three halogen atoms on the benzene ring. Although it is expected that refractive index of TBA should be lower owing to less bromine atoms on the benzene ring, TBA is chosen as a component for eutectic for two reasons. Firstly, the molecular weight of TBA is smaller that components with five bromine atoms (see also Table 2), which should result in lower melting point of TBA (as proven as true, see Table 2) so that the starting melting points are nearer to the desired temperatures (for photo-curing resins: room temperature or slightly above). The second reason is to analyze if slight changes in molecular structure (as the case PBPA and TBA) could give rise to significant eutectic effects.

The corresponding iodine acrylate in which the benzene ring is "saturated" with iodine atoms would be pentaiodophenyl acrylate, the starting substances of which had, unfortunately, bad availability. TIA with three iodine atoms is, therefore, the best representative of multi-iodine compounds.

Examples with condensed aromatic groups are AMA, VN and VK, where the anthracylmethyl-group is attached to acrylate, naphthyl- and carbazole- groups to vinyl, respectively.

The acrylate compounds (No. 1 to 6 in Table 1) are synthesized by acrylization via the reaction between acryloyl chloride and the corresponding alcohols. Synthesis steps and purification methods of several selected acrylates are listed in the appendix. The vinyl components, i.e. VN and VK, are commercially available, e.g. from Aldrich. They are purified through recrystallization before use. Properties of the eutectic components are summarized in Table 2.

**Table 2 Properties of the eutectic components**

| **Code** | **Molecular weight** | **Color and state** | **Melting point** |
|---|---|---|---|
| PBPA | 542.6 | White crystal | 149,7-150,7°C |
| PBPM | 556.7 | Slight yellowish crystal | 139,1-140,1°C |
| PBBA | 556.7 | White powder | 121,6-123,3°C |
| TIA | 525.8 | White crystal | 95,4-96,8°C |
| TBA | 384.8 | White crystal | 76,4-77,7°C |
| AMA | 264.3 | Yellow crystal | 87,4-88,5°C |
| VN | 154.2 | White powder | 64,6-65,7°C |
| VK | 193.2 | White powder | 63,5-65.0°C |

The five-hold substituted acrylates (PBPA, PBPM, PBBA) have all high molecular weights and high melting points, more than 100°C above room temperature.
The three-fold substituted acrylates (TIA and TBA) show as expected lower melting points. The vinyl monomers have much lower molecular weights and their melting points are accordingly also quite low. Except for AMA, which is a somewhat yellowish crystal, all the monomers are white in color. In the melting state, they are colorless or bright in color.

Besides colorlessness, one of the most important material properties of the eutectic monomers for optical applications is their refractive index. These materials find their applications generally in their polymer state. Refractive indices, therefore, refer usually to those as measured from the corresponding homo-polymers. Table 3 sums up refractive indices from literature and as measured in our house (SRT values).

**Table 3 Refractive index of homo-polymers**

| **Monomer code** | **Melting point** | **Film color** | **n_{D} (Lit.)** | **n_{D} (SRT*)** |
|---|---|---|---|---|
| PBPA | 149,7-150,7°C | Slightly yellow | 1,71 | 1,700 |
| PBPM | 139,1-140,1°C | Slightly yellow | 1,71 | -- |
| PBBA | 121,6-123,3°C | Colorless | 1,67 | 1,699 |
| TIA | 95,4-96,8°C | Slightly brawn | -- | 1,731 |
| TBA | 76,4-77,7°C | Colorless | -- | 1,659 |
| AMA | 87,4-88,5°C | Yellowish | -- | 1,626 |
| VN | 64,6-65,7°C | Slightly brown | 1,68 | 1,681 |
| VK | 63,5-65,0°C | Slightly yellow | 1,69 | 1,715 |

| | | | | |
|---|---|---|---|---|
| *SRT: SeeReal Technologies GmbH, Dresden, author of this invention. | | | | |

Films of the homo-polymers are obtained through thermal polymerization of pure monomers (i.e. without additive or initiator). A small amount of the monomer is placed between two glass substrates and heated on a hot plate to temperatures higher than the melting point of the monomer. The thermal polymerization takes place usually at 140 to 160°C for 10 to 15 minutes. For monomers which are difficult thermal polymerizible, the systems are heated to about 180°C for up to half an hour. After cooling down, the films are separated from the glass substrates and refractive index measured with a refractometer which is equipped with a yellow filter to deliver refractive index with a wave length of 589.3nm (coded as nD). Index oils used are 1-bromonaphthalene and diiodomethane, nD of which at 23°C are 1.6567 and 1.7400, respectively.

As can be seen in Table 3, differences in refractive index results show up between literature values and measured values obtained at SRT. There are many parameters to influence refractive index of solids samples: measuring apparatus, temperature, method of polymerization, sample properties (molecular weight, molecular weight distribution, thermal history and even thickness), to name just a few. Comparison of these values should be, therefore, restrained to certain limits.

The five-hold bromine-substituted acrylates show as expected higher refractive indices than the three-hold counterpart TBA. TIA shows extremely high value due to the three-fold presence of iodine atoms which have very large polaribility. The condensed aromatics have different light-refractive capacities, carbazole in VK being the highest with 1,715. It should be noted that the four monomers: PBPA, PBBA, TIA and VK, exhibit values quite near or higher than the mark 1.70.

An object of the present invention is to provide photo-curable resin compositions with very high refractive index and low melting points. Other optical properties like colourless, homogeneity, low dispersion, and low haze are also preconditioned.

The above object of the present invention can be attained by a resin composition consisting mainly of various acrylates:
- a naphthylaliphatic acrylate,
- an aromatic multiacrylate,
- a multibromated aromatic acrylate,
- and a photo initiator.
The high refractive indices of the resins are realized by careful design on molecular structures and the low melting points are achieved by employing the eutectic principle in which two or more resins are mixed with defined proportions. Other optical properties like colourlessness, low dispersion and the like can be achieved by selecting type and concentration of corresponding eutectic components.

### 3. Short description of preferred embodiments

The results of 18 binary systems from the eight eutectic components are summarized in Table 4 to give an overview of the most important data. Detailed discussion and definition of the abbreviations see below.

**Table 4 Results of binary systems**

| **Binary System** | **Melting point (°C)** | **Eutectic Point¹⁾** | **ΔTmax²⁾ (°C)** | **Eutectic region** |
|---|---|---|---|---|
| PBPA/PBPM³⁾ | 150/140 | 127,3°C | 12,2°C | 40-60% PBPM |
| PBBA/PBPA | 122/150 | 104°C | 18°C | 20-40% PBPA |
| PBBA/PBPM | 122/140 | 110°C | 12°C | 20-40% PBPM |
| TBA/TIA³⁾ | 77/96 | 62,4°C | 13,7°C | 40-60% TIA |
| AMA/TIA | 88/96 | 65,9°C | 22,2°C | 65-75% TIA |
| TBA/AMA | 77/88 | 56,8°C | 19,3°C | 25-35% AMA |
| PBPA/TIA | 150/96 | 90°C | 5,4°C | 75-85% TIA |
| PBPM/TIA | 140/96 | 90°C | 5,4°C | 75-85% TIA |
| PBBA/TIA | 122/96 | 88°C | 7,8°C | 60-75% TIA |
| PBPA/TBA | 150/77 | 72°C | 4,2°C | 75-85% TBA |
| PBPM/TBA | 140/77 | 73°C | 4,4°C | 75-85% TBA |
| PBBA/TBA | 122/77 | 75°C | 1,3°C | 80-90% TBA |
| TBA/VK³⁾ | 77/64 | 37°C | 26,5°C | 30-50% VK |
| TIA/VK | 96/64 | 48,6°C | 14,9°C | 30-50% VK |
| AMA/VK | 88/64 | 54,2°C | 10°C | 50-70% VK |
| TBA/VN³⁾ | 77/65 | 35°C | 29,5°C | 30-50% VN |
| TIA/VN | 96/65 | 45,2°C | 19°C | 30-50% VN |
| AMA/VN | 88/65 | 49,1°C | 15°C | 55-65% VN |

| | | | | |
|---|---|---|---|---|
| 1) Eutectic point is the lowest melting point among all eutectic mixtures. 2) T1 is the temperature, at which the first drop of liquid begins to appear. T2 is the temperature, at which all the substance is liquefied. ΔTmax is the maximal reduction in melting point, defined by the difference between T1 of the components with lower melting point and T2 of the eutectic point (see more in the Figures). 3) These binary systems show the most interesting eutectic properties and are further discussed in embodiments. | | | | |

### 3.1 First embodiment

Binary systems with two acrylate monomers

**Table 5 First embodiment**

| **PBPA/PBPM** | | | **TBA/TIA** | |
|---|---|---|---|---|
| **x (PBPM%)** | **Melting point** | | **x (TIA%)** | **Melting point** |
| 0,000 | 148,7-150°C | | 0,000 | 76,1-77,7°C |
| 10,0 | 141,5-148,5°C | | 10,0 | 73-74°C |
| 20,1 | 135,9-142,1°C | | 25,1 | 66-70°C |
| 30,0 | 130,4-136,5°C | | 40,1 | 62,8-63°C |
| 39,6 | 124,6-132,4°C | | 50,0 | 60,4-62,4°C |
| 50,0 | 123,2-127,3°C | | 59,7 | 61,3-70°C |
| 60,1 | 125-129°C | | 75,0 | 61,8-80°C |
| 70,0 | 128,7-133°C | | 90,0 | 75-98°C |
| 79,8 | 132,4-135,8°C | | 100,0 | 95,8-96,5°C |
| 89,9 | 136-140°C | | | |
| 100,0 | 139,5-141,7°C | | | |

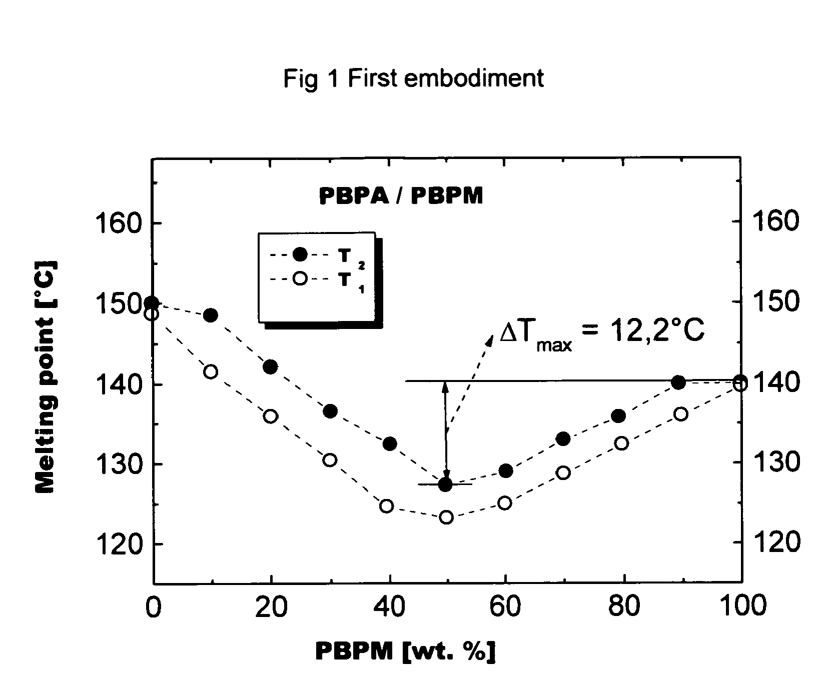

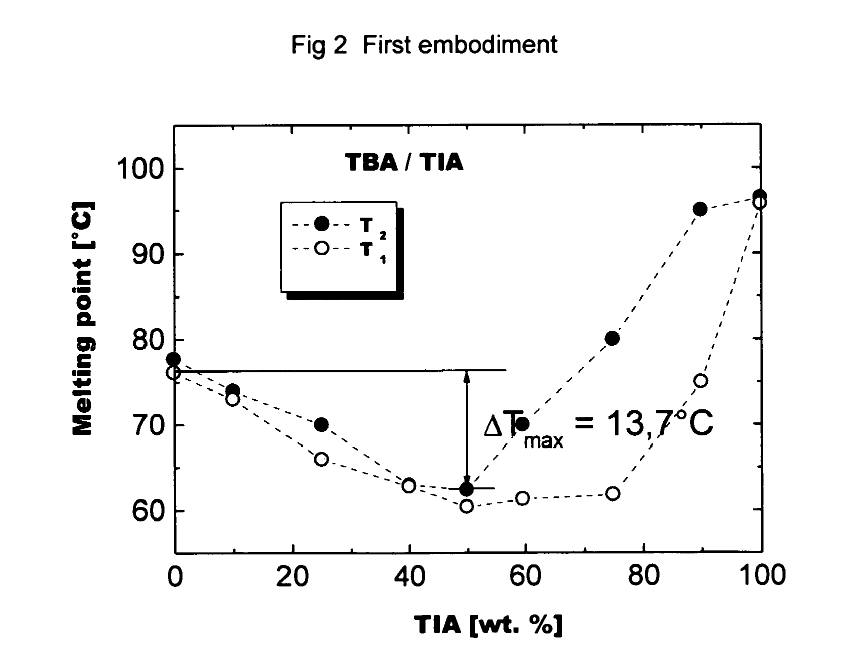

### 3.2 Second embodiment

Binary systems with an acrylate and a vinyl monomer.

**Table 6 Second embodiment**

| **TBA/VN** | | | **TBA/VK** | |
|---|---|---|---|---|
| **x (VN%)** | **Melting point** | | **x (VK%)** | **Melting point** |
| 0,000 | 76,4-77,7°C | | 0,000 | 76,4-77,7°C |
| 9,92 | 50,0-72,5°C | | 9,95 | 53,5-71,5°C |
| 19,8 | 35,0-69,8°C | | 19,9 | 40-63°C |
| 29,9 | 32,4-54,9°C | | 29,9 | 36-49°C |
| 39,9 | 32,3-35,0°C | | 39,8 | 34,5-37°C |
| 49,9 | 32,2-50°C | | 50,0 | 34,5-47°C |
| 60,0 | 35,5-54,6°C | | 60,0 | 34,9-52°C |
| 69,9 | 45,0-57,5°C | | 69,6 | 36-55,7°C |
| 80,0 | 50,8-61,5°C | | 80,0 | 46,1-57,1°C |
| 90,0 | 59,6-63,7°C | | 90,0 | 58,1-61,7°C |
| 100,0 | 64,5-65,6°C | | 100,0 | 63,5-65°C |

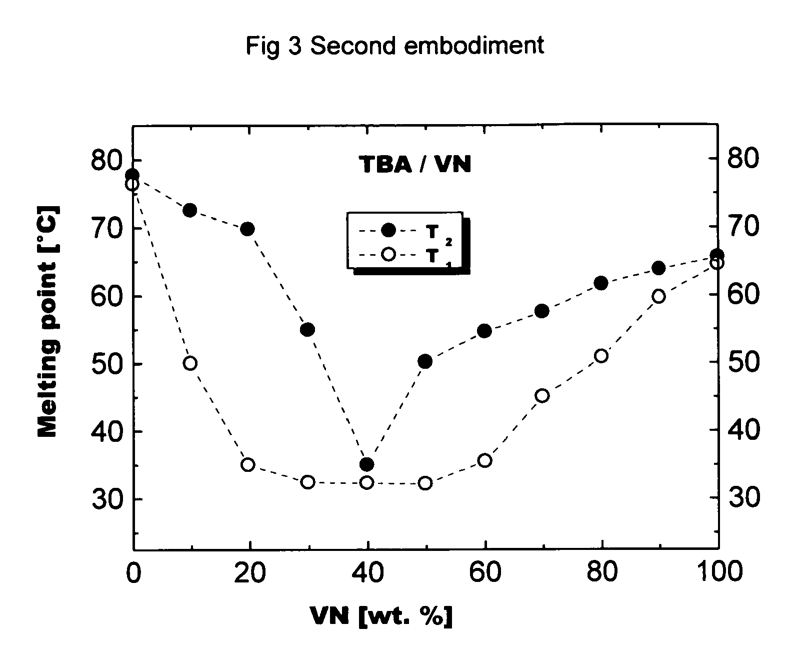

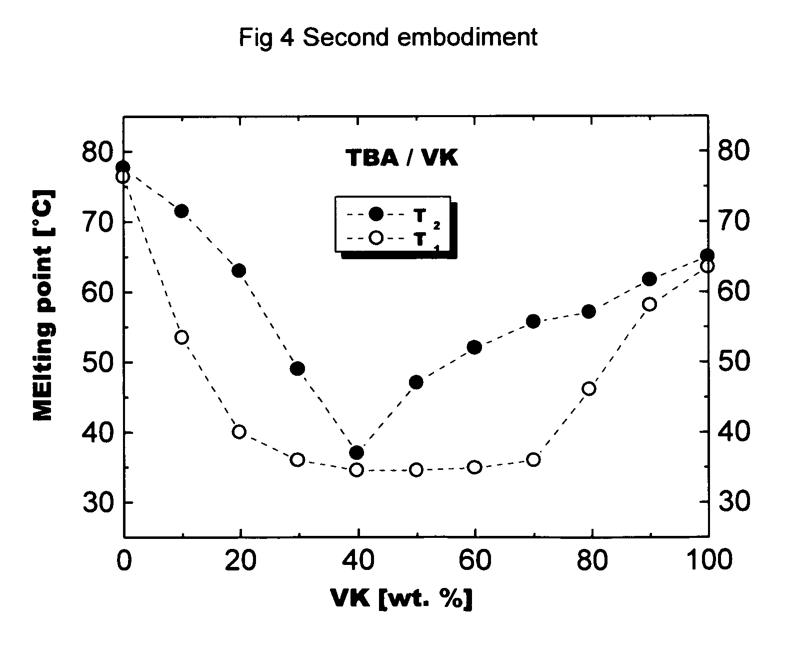

### 4. Syntheses of monomers PBPA, TIA, and AMA

### 4.1 Synthesis of 2,3,4,5,6-pentabromphenyl acrylate (PBPA)

### 4.1.1 Reaction and chemicals

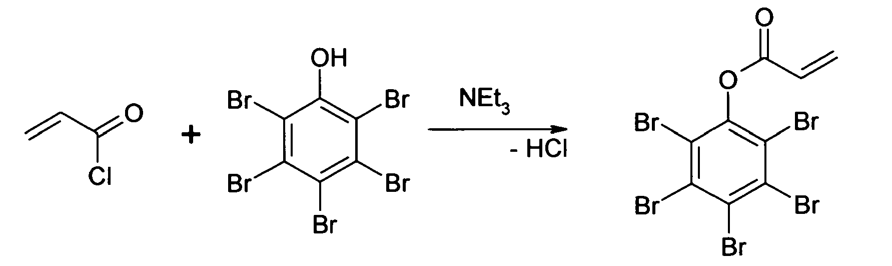

Acryloyl chloride was distilled before use. Triethylamine was refluxed over calcium hydride and then distilled. Pentabromphenol was used as received. All chemical and solvents were purchased from Aldrich or Fluka.

### 4.1.2 Synthesis steps

Solution A: 50.23g (0.10mol) pentabromphenol, 21.29g (0.21 mol) triethylamine were dissolved under inert gas in a 1-Litre flask in 300ml dry dichloromethane, yielding a yellow solution which was cooled with ice/salt to about -4°C.

Solution B: 10.6ml (0.125mol) acryloyl chloride was dissolved in a 250ml dropping funnel in 50ml dry dichloromethane and the funnel was locked up with a dry tube.

Under inert gas, stirring and ice/salt cooling, solution B was dropped slowly into solution A in about 3 to 4 hours. The yellowish, turbid mixture was then stirred at room temperature overnight.

The white triethylamine-hydrochloric acid salt, which floated over the yellowish-clear solution, was separated from the solution with a Büchner funnel. The solution was washed two times with 150ml 5% sodium hydrogen carbonate solution and then three times with 150ml water. The organic phase was dried with magnesium sulphate overnight and the solvent removed with a rotation evaporator, yielding 35.29g (0.066mol) brown liquid (yield: 66.2%).

### 4.1.3 Purification

The raw product was purified through recrystallization from isopropanol with a ratio of 20:1 (isopropanol:PBPA). 163.37g raw product was recrystallized and 128.03g pure product was obtained with a yield of 78.4%. Yield of the whole reaction is 51.9%. Pure PBPA is white crystals with melting point of 148-150°C.

### 4.2 Synthesis of 2,4,6-triiodphenyl acrylate (TIA)

### 4.2.1 Reaction and chemicals

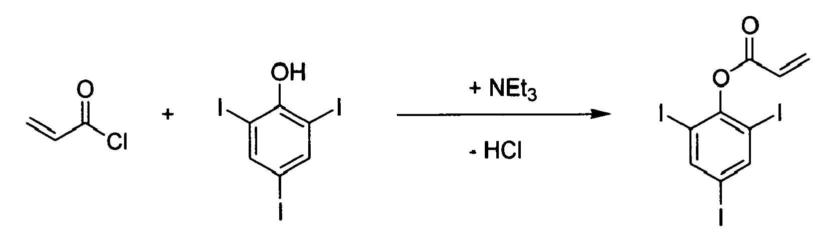

Chemicals and solvents are purchased and purified the same as those described in Section 4.1.1

### 4.2.2 Synthesis steps

Solution A: 53.89g (0.114mol) 2,4,6-triiodphenol, 20ml (0.137mol) triethylamine were dissolved under inert gas in a 2-Litre flask in 800ml dry dichloromethane, yielding a red-brownish solution. The mixture was cooled with ice/salt.

Solution B: 12ml (0.14mol) acryloyl chloride was dissolved in a 250ml dropping funnel in 150ml dry dichloromethane and the funnel was locked up with a dry tube.

Under inert gas, stirring and ice/salt cooling, solution B was dropped slowly into solution A in about 3 to 4 hours. The yellowish, turbid mixture was then stirred at room temperature overnight.

The white triethylamine-hydrochloric acid salt, which floated over the yellowish-clear solution, was separated from the solution with a Buchner funnel. The solution was washed six times with 200ml 5% sodium hydrogen carbonate solution and then five times with 200ml water. The organic phase was dried with magnesium sulphate overnight and the solvent removed with a rotation evaporator, yielding 50.98g (0.094mol) slightly yellowish solid (yield: 82.4%).

### 4.2.3 Purification

The raw product was purified through recrystallization from hexane with a ratio of 20:1 (hexane:TIA). 48.82g raw product was recrystallized and 42.59 pure product was obtained with a yield of 83.5%. Yield of the whole reaction is 68.8%. Pure TIA is white crystals with melting point of 95.4-96.8°C.

### 4.3 Synthesis of 9-Anthracylmethyl acrylate (AMA)

### 4.3.1 Reaction and chemicals

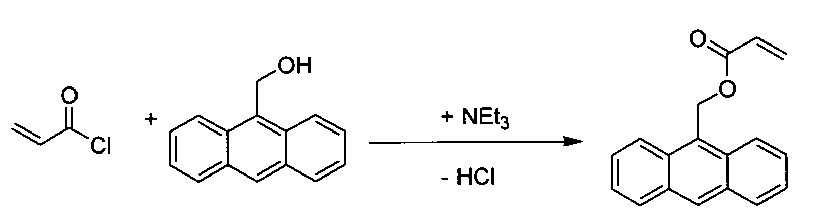

Chemicals and solvents are purchased and purified the same as those described in Section 4.1.1

### 4.3.2 Synthesis steps

Solution A: 24.31g (0.117mol) 9-(hydroxymethyl)-anthracene, 20ml (0.137mol) triethylamine were dissolved under inert gas in a 1-Litre flask in 400ml dry dichloromethane, yielding a red-brownish solution. The mixture was cooled with ice/salt.

Solution B: 12.5ml (0.14mol) acryloyl chloride was dissolved in a 250ml dropping funnel in 100ml dry dichloromethane and the funnel was locked up with a dry tube.

Under inert gas, stirring and ice/salt cooling, solution B was dropped slowly into solution A in about 3 to 4 hours. The yellowish, turbid mixture was then stirred at room temperature overnight.

The white triethylamine-hydrochloric acid salt, which floated over the yellowish-clear solution, was separated from the solution with a Buchner funnel. The solution was washed four times with 200ml 5% sodium hydrogen carbonate solution and then four times with 200ml water. The organic phase was dried with magnesium sulphate overnight and the solvent removed with a rotation evaporator, yielding 19.9g (0.0759mol) orange solid (yield: 65%).

### 4.3.3 Purification

The raw product was purified through recrystallization from hexane with a ratio of 30:1 (hexane: AMA). 6.71graw product was recrystallized and 4.07g pure product was obtained with a yield of 60.7%. Yield of the whole reaction is 39.4%. Pure AMA is yellow crystals with melting point of 87.4-88.5°C.

## Claims

1. Acrylate and vinyl resin mixtures with the properties of photo-curability, very high refractive indices, and low melting points are comprised of
(a) one or several multi-halogenated aromatic acrylates or multi-halogenated aromatic methacrylates, typically
2,3,4,5,6-pentabromophenyl acrylate, 2,3,4,5,6-pentabromobenzyl acrylate, 2,3,4,5,6-pentabromophenyl methacrylate, 2,3,4,5,6-pentabromobenzyl methacrylate, 2,4,6-tribromophenyl acrylate, or 2,4,6-tribromophenyl methacrylate, 2,4,6-triiodophenyl acrylate, or
2,4,6-triiodophenyl methacrylate, with a weight percent of 30 to 70 % for each acrylate or methacrylate, preferably 40 to 60 % in the formulation.
(b) one or several compounds of condensed aromatics, typically
9-anthracylmethacrylate, with a weight percent of 30 to 70% for each, preferably 40 to 60 % in the formulation.
(c) one or several aromatic vinyl compounds, typically 1- or 2-vinyl naphthalene, or N-vinyl carbazole, with a weight percent of 30 to 70 % for each, preferably 40 to 60% in the formulation.
(d) and a photo-initiator, e.g. Lucirin TPO-L or Irgacur184, with a weight percent of 0.1 to 5 %, preferably 0.5 to 1.5 % in the formulation.

2. Acrylate and vinyl monomer/resin mixtures with a significant reduction of the melting point due to heterogeneous blends of binary or multiple intermixtures of components according to claim (1).

3. Acrylate and vinyl resin mixtures according to claim (2) due to a eutectic composition.

4. Binary eutectic composition of binary blends of pure acrylates according to claim (1).

5. Binary eutectic composition according to claim (4) where PBPA and PBPM are components of a binary system with a reduced melting point preferably at a 50/50 +/-5% mixture.

6. Binary eutectic composition according to claim (5) where PBPA and PBPM are components of a binary system with a reduced melting point preferably at a 50/50 mixture.

7. Binary eutectic composition according to claim (5) with a melting point 12K below the lowest melting point of the pure components, reaching 127°C melting temperature.

8. Binary eutectic composition according to claim (4) where TBA and TIA are components of a binary system with a reduced melting point preferably at a 50/50 +/-5% mixture.

9. Binary eutectic composition according to claim (8) where TBA and TIA are components of a binary system with a reduced melting point preferably at a 50/50 mixture.

10. Binary eutectic composition according to claim (8) with a melting point 14K below the lowest melting point of the pure components, reaching 62°C melting temperature.

11. Ternary or blends of higher orders containing three or more acrylic components mentioned above with a reduced melting point according to a ternary or an eutectic point at higher orders

12. Binary eutectic composition of binary blends of acrylates and vinyl monomers according to claim (1).

13. Binary eutectic composition according to claim (12) where TBA and VN are components of a binary system with a reduced melting point preferably at a 40%TBA / 60%VN +/-5% mixture.

14. Binary eutectic composition according to claim (12) where TBA and VN are components of a binary system with a reduced melting point preferably at a 40%TBA / 60%VN mixture.

15. Binary eutectic composition according to claim (13) with a melting point 29K below the lowest melting point of the pure components, reaching 35°C melting temperature.

16. Binary eutectic composition according to claim (12) where TBA and VK are components of a binary system with a reduced melting point preferably at a 40%TBA / 60%VK mixture.

17. Binary eutectic composition according to claim (16) with a melting point 26K below the lowest melting point of the pure components, reaching 37°C melting temperature.

18. Ternary or blends of higher orders containing at least one acrylic component and vinyl monomers according to one or more of preceding claims with a reduced melting point according to a ternary or an eutectic point at higher orders.

19. An optical element comprising the resin mixtures according to claim (1).

20. A lenticular mask comprising the resin composition according to claim (1).
